# EUROPEAN PATENT APPLICATION

(11) **EP 4 345 961 A1**
(43) Date of publication of application: **03.04.2024**
(21) Application number: 22815018.1
(22) Date of filing: 16.05.2022
(51) Int. Cl.: H01M 10/04, B65G 54/02, B65G 47/248, B65G 47/22, B65G 47/90

(54) **BATTERY CELL INSERTION APPARATUS AND METHOD**

(30) Priority: 31.05.2021 CN 202121205057 U
(71) Applicant: SVOLT ENERGY TECHNOLOGY CO., LTD, Changzhou, Jiangsu 213200 (CN)
(72) Inventor: QIN, Jie, hangzhou, Jiangsu 213200 (CN)
(74) Representative: Groth & Co. KB
(86) International application number: PCT/CN2022/092998
(87) International publication number: WO 2022/252971

(57) **Abstract**

A battery cell insertion apparatus includes a magnetic levitation conveying line, as well as a housing sleeving mechanism, an overturning mechanism (9), a pressing mechanism (10), a detection mechanism (11), a welding mechanism (12), and a transfer mechanism (13), which are disposed in sequence along the magnetic levitation conveying line. A number of following trays (3) are carried on the magnetic levitation conveying line, each following tray (3) being provided with a clamping unit for positioning and placing a battery cell. The housing sleeving mechanism is configured to sleeve a housing on the battery cell. The overturning mechanism (9) is configured to overturn the battery cell on which the housing has been sleeved. The pressing mechanism (10) is configured to press the battery cell into the housing sleeved thereon. The detection mechanism (11) is configured to detect the pressed battery cell and housing. The welding mechanism (12) is configured to weld the battery cell and the housing together. The transfer mechanism (13) is configured to unload the welded battery cell and housing from the following tray (3). By using a magnetic levitation conveying line to drive following trays (3), the battery cell insertion apparatus can move and position the following trays (3) quickly and accurately, and thus can improve the operation efficiency of a battery cell insertion process. In addition, due to the adoption of the magnetic levitation conveying line, the cleanliness of a workshop is high, thereby improving battery cell quality.

## Description

This disclosure claims the priority of patent application No. 202121205057.7, filed with the Chinese Patent Office on May 31, 2021, and entitled "Battery Cell Insertion Apparatus", which is hereby incorporated by reference in its entirety.

### TECHNICAL FIELD

The present disclosure relates to the field of battery processing technology, in particular to a battery cell insertion apparatus, and the present disclosure also relates to a battery cell insertion method.

### BACKGROUND

The production capacity and efficiency in a power battery assembly stage have been a key factor that restricts the production capacity of power batteries. A battery cell insertion process is one of important links in battery cell assembly, so the operation efficiency of the battery cell insertion process seriously restricts the manufacturing capacity of battery cells.

However, most of existing battery cell insertion apparatuses adopt horizontal insertion into a housing, resulting in low operation efficiency during battery cell and housing assembly. Moreover, a conveying mechanism of a battery cell insertion apparatus is generally a traditional belt conveyor, resulting in low conveying efficiency, thus affecting the overall operation efficiency of a battery cell insertion process. Furthermore, adopting a belt conveying mode also leads to particulate contamination, resulting in reduced cleanliness of a workshop, thereby affecting battery cell quality

### SUMMARY OF THE INVENTION

In view of this, the present disclosure aims to propose a battery cell insertion apparatus to increase the operation efficiency of a battery cell insertion process and improve battery cell quality.

To achieve the above object, a technical solution of the present disclosure is implemented as follows:
A battery cell insertion apparatus for inserting a battery cell into a housing, wherein the battery cell insertion apparatus includes a magnetic levitation conveying line, as well as a housing sleeving mechanism, an overturning mechanism, a pressing mechanism, a detection mechanism, a welding mechanism, and a transfer mechanism, which are disposed in sequence along the magnetic levitation conveying line, wherein
a number of following trays are carried on the magnetic levitation conveying line, each following tray being provided with a clamping unit for positioning and placing a battery cell;
the housing sleeving mechanism is configured to sleeve a housing on the battery cell;
the overturning mechanism is configured to overturn the battery cell on which the housing has been sleeved;
the pressing mechanism is configured to press the battery cell into the housing sleeved thereon;
the detection mechanism is configured to detect the pressed battery cell and housing;
the welding mechanism is configured to weld the battery cell and the housing together; and
the transfer mechanism is configured to unload the welded battery cell and housing from the following tray.

Further, the clamping unit is configured to erect the battery cell in the following tray; and the housing sleeving mechanism is configured to sleeve the housing from the top of the battery cell onto the battery cell.

Further, the housing sleeving mechanism includes a loading unit, a dust absorption unit and an insertion unit; the loading unit is configured to load the housing one by one; the dust absorption unit is configured to perform dust absorption on the loaded housing; and the insertion unit is configured to sleeve the housing after dust absorption onto the battery cell.

Further, the housing sleeving mechanism further includes a housing storage unit and a turntable; the housing storage unit is configured to store a housing to be loaded; the loading unit is located between the housing storage unit and the turntable, and the insertion unit is located between the turntable and the magnetic levitation conveying line; and the dust absorption unit is located on the turntable, and the dust absorption unit follows rotation of the turntable so as to be alternately at the loading unit and at the insertion unit.

Further, the loading unit includes a first movement module and a suction cup assembly disposed on the first movement module, and the insertion unit includes a second movement module and a grabbing assembly disposed on the second movement module; and driven by the first movement module, the suction cup assembly is movable between the housing storage unit and the turntable, and driven by the second movement module, the grabbing assembly is movable between the turntable and the magnetic levitation conveying line.

Further, a step portion is formed between a top cover of the battery cell and a rim of the housing as a result of the battery cell being pressed into the housing; and the detection mechanism is configured to detect the step portion formed.

Further, a temporary storage station is provided between the housing sleeving mechanism and the overturning mechanism; and the temporary storage station is configured to temporarily store the battery cell on which the housing has been sleeved.

Further, an NG station is provided between the detection mechanism and the welding mechanism; a removal mechanism is provided between the NG station and the magnetic levitation conveying line; and the removal mechanism is configured to move a battery cell that is detected as an NG product by the detection mechanism to the NG station.

Further, the magnetic levitation conveying line includes a return line body, and a plurality of conveying branch line bodies intersecting the return line body; and along each of the conveying branch line bodies, there are provided, respectively, the housing sleeving mechanism, the overturning mechanism, the pressing mechanism, the detection mechanism, the welding mechanism, and the transfer mechanism, which are arranged in sequence.

Further, the battery cell insertion apparatus includes a rack; and the magnetic levitation conveying line, the housing sleeving mechanism, the overturning mechanism, the pressing mechanism, the detection mechanism, the welding mechanism, and the transfer mechanism are disposed on the rack.

Compared with the prior art, the present disclosure has the following advantages:
By using a magnetic levitation conveying line to drive following trays, the battery cell insertion apparatus of the present disclosure can move and position the following trays quickly and accurately to improve the conveying rate of battery cells and housings, and thus improve the operation efficiency of a battery cell insertion process. In addition, due to the adoption of the magnetic levitation conveying line, particulate contamination in a workshop can be reduced effectively, thereby improving battery cell quality, as compared with traditional belt conveying. Moreover, the apparatus uses a mode of pressing a battery cell into a housing, i.e., a mode of vertical insertion of a battery cell into a housing, which is simpler in operation and achieves higher operation efficiency as compared with a traditional mode of horizontal insertion of a battery cell into a housing.

In addition, another object of the present disclosure is to propose a battery cell insertion method, including: positioning and placing a battery cell on a following tray by means of a clamping unit, and carrying a number of following trays by a magnetic levitation conveying line to a housing sleeving mechanism, an overturning mechanism, a pressing mechanism, a detection mechanism, a welding mechanism, and a transfer mechanism in sequence,
wherein at the position of the housing sleeving mechanism, the housing is sleeved on the battery cell by the housing sleeving mechanism;
at the position of the overturning mechanism, the battery cell on which the housing has been sleeved is overturned by the overturning mechanism;
at the position of the pressing mechanism, the battery cell is pressed into the housing sleeved thereon by the pressing mechanism;
at the position of the detection mechanism, the pressed battery cell and housing are detected by the detection mechanism;
at the position of the welding mechanism, the battery cell and the housing are welded together by the welding mechanism; and
at the position of the transfer mechanism, the welded battery cell and housing are unloaded from the following tray by the transfer mechanism.

Further, when the battery cell is placed in the following tray, the battery cell is erected in the following tray by the clamping unit, and at the position of the housing sleeving mechanism, the housing is sleeved from the top of the battery cell onto the battery cell by the housing sleeving mechanism.

Further, in a process of the housing sleeving mechanism sleeving the housing on the battery cell, the housing is loaded one by one by a loading unit, and dust absorption is performed on the loaded housing by a dust absorption unit, and then the housing after dust absorption is sleeved onto the battery cell by an insertion unit.

Further, before the battery cell on which the housing has been sleeved is conveyed from the housing insertion mechanism to the overturning mechanism, a plurality of battery cells on which housings have been sleeved are temporarily stored at a temporary storage station, and then the battery cells on which housings have been sleeved are conveyed one by one.

Further, when the detection mechanism detects the pressed battery cell and housing, if a detection result is a qualified product, the qualified product is conveyed to the welding mechanism for welding; and if the detection result is an NG product, the NG product is moved to an NG station.

The battery cell insertion method of the present disclosure uses a mode of conveying by a magnetic levitation conveying line, which achieves higher conveying efficiency and can also avoid workshop particulate contamination of a battery cell as compared with a traditional belt conveying mode. Moreover, the method uses a mode of pressing a battery cell into a housing, i.e., a mode of vertical insertion of a battery cell into a housing, which is simpler in operation and achieves higher operation efficiency as compared with a traditional mode of horizontal insertion of a battery cell into a housing.

### BRIEF DESCRIPTION OF THE DRAWINGS

The drawings as a part of the present disclosure are used to provide further understanding of the present disclosure. Illustrative embodiments of the present disclosure and description thereof are used for explaining the present disclosure but do not improperly limit the present disclosure. In the drawings:
Fig. 1 is a schematic structural diagram of a battery cell insertion apparatus in embodiments of the present disclosure; and
Fig. 2 is a schematic structural diagram of a housing sleeving mechanism in embodiments of the present disclosure.

Reference numerals: 1, return line body; 2, conveying branch line body; 3, following tray; 4, loading unit; 401, first movement module; 402, suction cup assembly; 5, dust absorption unit; 6, insertion unit; 601, second movement module; 602, grabbing assembly; 7, housing storage unit; 8, turntable; 9, overturning mechanism; 10, pressing mechanism; 11, detection mechanism; 12, welding mechanism; 13 , transfer mechanism; 14, temporary storage station; 15, NG station; 16, removal mechanism; 17, rack.

### DETAILED DESCRIPTION

It is to be noted that embodiments in the present disclosure and features in the embodiments can be combined with each other without conflicts.

In description of the present disclosure, it is to be noted that if such terms "upper", "lower", "inner", "outer", etc. that denote orientation or location relations appear, they are based on orientation or location relations illustrated in the drawings, and are only intended to facilitate describing the present disclosure and simplify description, instead of indicating or implying the denoted apparatuses or elements necessarily have specific orientations and are constructed and operated in specific orientations, and thus they should not be construed as limiting the present disclosure. Besides, if such terms as "first" and "second" appear, they are used for descriptive purposes only and should not be construed as indicating or implying relative importance.

In addition, in description of the present disclosure, unless otherwise defined expressly, the terms "install", "be connected with", "be connected" and "connector" should be construed in a broad sense. For example, it may indicate "fixed connection", "detachable connection" or "integral connection"; it may indicate "mechanical connection" or "electrical connection"; and it may indicate "direct connection", "indirect connection by an intermediate medium" or "internal communication between two elements". For those of ordinary skill in the art, specific meanings of the above terms in the present disclosure may be understood based on specific circumstances.

The present disclosure will be described in detail below with reference to the accompanying drawings in conjunction with embodiments.

The present embodiments first relate to a battery cell insertion apparatus for inserting a battery cell into a housing. In terms of an overall structure, the apparatus includes a magnetic levitation conyeying line, as well as a housing sleeving mechanism, an overturning mechanism 9, a pressing mechanism 10, a detection mechanism 11, a welding mechanism 12, and a transfer mechanism 13, which are disposed in sequence along the magnetic levitation conveying line.

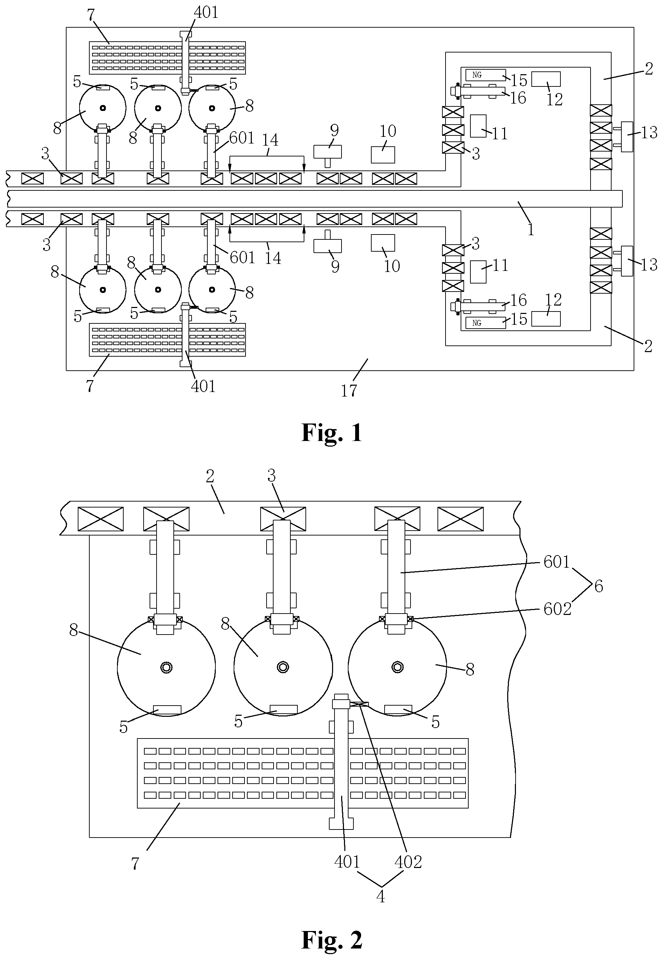

Based on the overall composition as above, an exemplary structure of the battery cell insertion apparatus of the present embodiments is shown in Figs. 1 and 2, wherein a number of following trays 3 are carried on the magnetic levitation conveying line in the present embodiments, each following tray 3 being provided with a clamping unit for positioning and placing a battery cell; and the housing sleeving mechanism in the present embodiments is configured to sleeve a housing on the battery cell. Specifically, the above-mentioned clamping unit is configured to erect the battery cell in the following tray 3; and the above-mentioned housing sleeving mechanism is configured to sleeve the housing from the top of the battery cell onto the battery cell.

Of course, the number of the above-mentioned following trays 3 may be set and adjusted according to the actual situation, so as to achieve relatively optimal conveying efficiency.

Moreover, configuring the above-mentioned clamping unit to erect the battery cell in the following tray 3 can, in the subsequent process, facilitate the housing sleeving mechanism sleeving the housing from the top of the battery cell onto the battery cell, and after the battery cell on which the housing has been sleeved is overturned 180°by the overturning mechanism 9, achieve up-down shifting between the battery cell and the housing so that the battery cell is located directly above the housing, and subsequently, the pressing mechanism 10 presses the battery cell into the housing, thus implementing vertical insertion of the battery cell, which is simpler in operation and achieves higher operation efficiency as compared with a traditional mode of horizontal insertion of a battery cell into a housing.

In specific implementation, an insertion pressure applied to the battery cell by the pressing mechanism 10 in the present embodiments is preferably smaller than 1.2 MPa to avoid damage to the battery cell or the housing due to an excessive pressure while ensuring that the battery cell is pressed into the housing. For example, the insertion pressure may be set to 1.1 MPa, 1.0 MPa, 0.9 MPa, or the like.

As a preferred implementation, as shown in Figs. 1 and 2, the above-mentioned housing sleeving mechanism includes a loading unit 4, a dust absorption unit 5, and an insertion unit 6. The loading unit 4 is configured to load the housing one by one; the dust absorption unit 5 is configured to perform dust absorption on the loaded housing; and the insertion unit 6 is configured to sleeve the housing after dust absorption onto the battery cell.

Still in conjunction with Figs. 1 and 2, the housing sleeving mechanism in the present embodiments further includes a housing storage unit 7 and a turntable 8. The housing storage unit 7 is configured to store a housing to be loaded. Moreover, the above-mentioned loading unit 4 is located between the housing storage unit 7 and the turntable 8, and the above-mentioned insertion unit 6 is located between the turntable 8 and the magnetic levitation conveying line; and the above-mentioned dust absorption unit 5 is located on the turntable 8, and the dust absorption unit 5 follows rotation of the turntable 8 so as to be alternately at the loading unit 4 and at the insertion unit 6.

It is to be noted that preferably a plurality of turntables 8 in the present embodiments are provided, and configured with a plurality of insertion units 6 to match the turntables 8, and the insertion units 6 and the turntables 8 are matched in a one-to-one manner. Here, only three groups of turntables 8 and insertion unit 6 are illustrated in the figures. In specific implementation, their numbers may be set and adjusted correspondingly according to the actual requirement so as to achieve a relatively optimal use effect.

In the present embodiments, preferably, as shown in Fig. 2, the above-mentioned loading unit 4 includes a first movement module 401, and a suction cup assembly 402 disposed on the first movement module 401, and the insertion unit 6 includes a second movement module 601, and a grabbing assembly 602 disposed on the second movement module 601. Moreover, driven by the first movement module 401, the suction cup assembly 402 is movable between the housing storage unit 7 and the turntable 8, and driven by the second movement module 601, the grabbing assembly 602 is movable between the turntable 8 and the magnetic levitation conveying line.

It is worth mentioning that preferably, the first movement module 401 in the present embodiments may adopt a mode of driving by a linear motor, with a slider being provided on a driving end of the linear motor, and the suction cup assembly 402 being disposed on the slider. Thus, driving the slider by the linear motor can implement driving and moving of the suction cup assembly 402, so as to be conducive to the loading of the housing one by one by the loading unit 4.

Moreover, the second movement module 601 in the present embodiments may preferably adopt the same structure as the first movement module 401, and the grabbing assembly 602 and the second movement module 601 may be assembled with each other by referring to the assembly of the suction cup assembly 402 and the first movement module 401 so as to be conducive to achieving a corresponding use effect, which will not be described here.

In addition, with reference to Fig. 2, based on the fact that a plurality of turntable 8 are arranged side by side, the above-mentioned first movement module 401 may also be configured to be movable to the left and to the right, to facilitate its operation among the plurality of turntables 8 in turn, thus further improving the operation efficiency of the entire housing sleeving mechanism.

Next, referring to Fig. 1, the overturning mechanism 9 in the present embodiments is configured to overturn the battery cell on which the housing has been sleeved. As a further improvement, in the present embodiments, a temporary storage station 14 is provided between the housing sleeving mechanism and the overturning mechanism 9, and the temporary storage station 14 is configured to temporarily store the battery cell on which the housing has been sleeved, to facilitate the overall apparatus's control of the conveying pace of the battery cell on which the housing has been sleeved, thus being conducive to the optimization and improvement of the operation efficiency of the overall apparatus.

Moreover, the pressing mechanism 10 in the present embodiments is configured to press the battery cell into the housing sleeved thereon. The detection mechanism 11 in the present embodiments is configured to detect the pressed battery cell and housing. In specific implementation, a step portion is formed between a top cover of the battery cell and a rim of the housing as a result of the aforementioned battery cell being pressed into the housing. Moreover, the aforementioned detection mechanism 11 is configured to detect the step portion formed. Of course, for the specific structure of the step portion described here, reference may be made to a common structure in the prior art, and it is not shown in the figures.

Further in conjunction with Fig. 1, the welding mechanism 12 in the present embodiments is configured to weld the battery cell and the housing together, and the transfer mechanism 13 in the present embodiments is configured to unload the welded battery cell and housing from the following tray 3. Preferably, an NG station 15 is provided between the detection mechanism 11 and the welding mechanism 12, and a removal mechanism 16 is provided between the NG station 15 and the magnetic levitation conveying line; and the removal mechanism 16 is configured to move a battery cell that is detected as an NG (NO GOOD, i.e., unqualified) product by the detection mechanism 11 to the NG station 15.

It is worth mentioning that the above-mentioned NG product refers to an unqualified product, and the above-mentioned NG station 15 refers to an unqualified product placement station.

Besides, still in conjunction with Fig. 1, preferably, the magnetic levitation conveying line in the present embodiments includes a return line body 1, and a plurality of conveying branch line bodies 2 intersecting the return line body 1. Moreover, along each of the conveying branch line bodies 2, there are provided, respectively, the housing sleeving mechanism, the overturning mechanism 9, the pressing mechanism 10, the detection mechanism 11, the welding mechanism 12, and the transfer mechanism 13 described above, which are arranged in sequence.

Specifically, between the above-mentioned return line body 1 and each conveying branch line body 2 is formed a cyclic loop for cyclic operation of vacant following trays 3. Furthermore, only two conveying branch line bodies 2 are illustrated in Fig. 1, while in actual applications, the number of the conveying branch line bodies 2 may be set and adjusted correspondingly according to the actual situation, to facilitate optimized arrangement of the overall apparatus, thus improving the operation efficiency of the overall apparatus and the space utilization of a workshop.

In this case, also preferably, the battery cell insertion apparatus in the present embodiments includes a rack 17. Moreover, the magnetic levitation conveying line, the housing sleeving mechanism, the overturning mechanism 9, the pressing mechanism 10, the detection mechanism 11, the welding mechanism 12, and the transfer mechanism 13 in the present embodiments are disposed on the rack 17.

It is to be noted that the structural configuration of the above-mentioned rack 17 may be set and adjusted according to the actual application situation, so as to achieve a relatively optimal use effect. In specific implementation, the structures mentioned above may be conventional structures in the technical field of battery cell insertion equipment in the prior art.

Besides, in addition to adopting conventional structures in the technical field of battery cell insertion equipment in the prior art, the above-mentioned loading unit 4, insertion unit 6, removal mechanism 16 and transfer mechanism 13 may also use SCAR (robot arm applied to assembly operations) robots or six-axis robots.

During use of the battery cell insertion apparatus of the present embodiments, a following tray 3 on which a battery cell is placed is first conveyed via a conveying branch body 2 to a housing sleeving mechanism and put on standby, at which time a housing to be loaded stored on a housing storage unit 7 is placed, via a loading unit 4, at a dust absorption unit 5 on a turntable 8, and after dust absorption at the dust absorption unit 5, with rotation of the turntable 8, the housing after dust absorption is conveyed to an insertion unit 6, whereupon the insertion unit 6 sleeves the housing after dust absorption on the standby battery cell.

Then, the battery cell on which the housing has been sleeved is conveyed through the following tray 3 to an overturning mechanism 9 for overturning, and subsequently conveyed to a pressing mechanism 10, the pressing mechanism 10 presses the battery cell into the housing sleeved thereon, the battery cell pressed into the housing is then conveyed to a detection mechanism 11 for detection, and at that time, a battery cell product detected to be qualified is conveyed through the following tray 3 directly to a welding mechanism 12, and a battery cell product detected to be unqualified is moved to an NG station 15 by a removal mechanism 16.

The battery cell product conveyed to the welding mechanism 12 is first welded by the welding mechanism 12 and then conveyed to a transfer mechanism 13, and the transfer mechanism 13 removes the welded battery cell product from the following tray 3, thus completing unloading of the battery cell product. Meanwhile, the vacant following tray 3 is transferred to a return line body 1 and put into subsequent cyclic operations.

By using a magnetic levitation conveying line to drive following trays 3, the battery cell insertion apparatus of the present embodiments can move and position the following trays 3 quickly and accurately to improve the conveying rate of battery cells and housings, and thus improve the operation efficiency of a battery cell insertion process. In addition, due to the adoption of the magnetic levitation conveying line, particulate contamination in a workshop can be reduced effectively, thereby improving battery cell quality, as compared with traditional belt conveying. Moreover, the apparatus uses a mode of pressing a battery cell into a housing, i.e., a mode of vertical insertion of a battery cell into a housing, which is simpler in operation and achieves higher operation efficiency as compared with a traditional mode of horizontal insertion of a battery cell into a housing.

In addition, the present embodiments further relate to a battery cell insertion method including: first positioning and placing a battery cell on a following tray 3 by means of a clamping unit, and carrying a number of following trays 3 by a magnetic levitation conveying line to a housing sleeving mechanism, an overturning mechanism 9, a pressing mechanism 10, a detection mechanism 11, a welding mechanism 12, and a transfer mechanism 13 in sequence.

At the position of the housing sleeving mechanism, the housing is sleeved on the battery cell by the housing sleeving mechanism; at the position of the overturning mechanism 9, then, the battery cell on which the housing has been sleeved is overturned by the overturning mechanism 9; and subsequently, at the position of the pressing mechanism 10, the battery cell is pressed into the housing sleeved thereon by the pressing mechanism 10.

At the position of the detection mechanism 11, the pressed battery cell and housing are detected by the detection mechanism 11; at the position of the welding mechanism 12, the battery cell and the housing are welded together by the welding mechanism 12; and finally, at the position of the transfer mechanism 13, the welded battery cell and housing are unloaded from the following tray 3 by the transfer mechanism 13.

It is worth mentioning that the above-mentioned battery cell on which the housing has been sleeved is overturned at an angle of 180° so as to be conducive to vertical insertion of the battery cell.

In specific implementation, preferably, when the battery cell is placed in the following tray 3 as described above, the battery cell is erected in the following tray 3 by the clamping unit, and at the position of the housing sleeving mechanism, the housing is preferably configured to be sleeved from the top of the battery cell onto the battery cell by the housing sleeving mechanism.

Furthermore, preferably, in a process of the housing sleeving mechanism sleeving the housing on the battery cell, the housing is loaded one by one by a loading unit 4, and dust absorption is performed on the loaded housing by a dust absorption unit 5, and then the housing after dust absorption is sleeved onto the battery cell by an insertion unit 6.

In addition, before the battery cell on which the housing has been sleeved is conveyed from the housing insertion mechanism to the overturning mechanism 9, preferably, a plurality of battery cells on which housings have been sleeved are temporarily stored at a temporary storage station 14, and then the battery cells on which housings 5 have been sleeved are conveyed one by one. Also, as a preferred implementation, when the detection mechanism 11 detects the pressed battery cell and housing, if a detection result is a qualified product, the qualified product is conveyed to the welding mechanism 12 for welding; and if the detection result is an NG product, the NG product is moved to an NG station 15.

The battery cell insertion method of the present embodiments uses a mode of conveying by a magnetic levitation conveying line, which achieves higher conveying efficiency and can also avoid workshop particulate contamination of a battery cell as compared with a traditional belt conveying mode. Moreover, the method uses a mode of pressing a battery cell into a housing, i.e., a mode of vertical insertion of a battery cell into a housing, which is simpler in operation and achieves higher operation efficiency as compared with a traditional mode of horizontal insertion of a battery cell into a housing.

Described above are only preferred embodiments of the present disclosure, which are not intended to limit the present disclosure, and all modifications, equivalent substitutions and improvements made within the spirit and principle of the present disclosure should be encompassed within the protection scope of the present disclosure.

## Claims

1. A battery cell insertion apparatus for inserting a battery cell into a housing, wherein the battery cell insertion apparatus comprises a magnetic levitation conveying line, as well as a housing sleeving mechanism, an overturning mechanism (9), a pressing mechanism (10), a detection mechanism (11), a welding mechanism (12), and a transfer mechanism (13), which are disposed in sequence along the magnetic levitation conveying line, wherein
a number of following trays (3) are carried on the magnetic levitation conveying line, each following tray (3) being provided with a clamping unit for positioning and placing a battery cell;
the housing sleeving mechanism is configured to sleeve a housing on the battery cell;
the overturning mechanism (9) is configured to overturn the battery cell on which the housing has been sleeved;
the pressing mechanism (10) is configured to press the battery cell into the housing sleeved thereon;
the detection mechanism (11) is configured to detect the pressed battery cell and housing;
the welding mechanism (12) is configured to weld the battery cell and the housing together; and
the transfer mechanism (13) is configured to unload the welded battery cell and housing from the following tray (3).

2. The battery cell insertion apparatus according to claim 1, wherein:
the clamping unit is configured to erect the battery cell in the following tray (3); and
the housing sleeving mechanism is configured to sleeve the housing from the top of the battery cell onto the battery cell.

3. The battery cell insertion apparatus according to claim 2, wherein:
the housing sleeving mechanism comprises a loading unit (4), a dust absorption unit (5) and an insertion unit (6);
the loading unit (4) is configured to load the housing one by one;
the dust absorption unit (5) is configured to perform dust absorption on the loaded housing; and
the insertion unit (6) is configured to sleeve the housing after dust absorption onto the battery cell.

4. The battery cell insertion apparatus according to claim 3, wherein:
the housing sleeving mechanism further comprises a housing storage unit (7) and a turntable (8);
the housing storage unit (7) is configured to store a housing to be loaded;
the loading unit (4) is located between the housing storage unit (7) and the turntable (8), and the insertion unit (6) is located between the turntable (8) and the magnetic levitation conveying line; and
the dust absorption unit (5) is located on the turntable (8), and the dust absorption unit (5) follows rotation of the turntable (8) so as to be alternately at the loading unit (4) and at the insertion unit (6).

5. The battery cell insertion apparatus according to claim 4, wherein:
the loading unit (4) comprises a first movement module (401) and a suction cup assembly (402) disposed on the first movement module (401), and the insertion unit (6) comprises a second movement module (601) and a grabbing assembly (602) disposed on the second movement module (601); and
driven by the first movement module (401), the suction cup assembly (402) is movable between the housing storage unit (7) and the turntable (8), and driven by the second movement module (601), the grabbing assembly (602) is movable between the turntable (8) and the magnetic levitation conveying line.

6. The battery cell insertion apparatus according to claim 1, wherein:
a step portion is formed between a top cover of the battery cell and a rim of the housing as a result of the battery cell being pressed into the housing; and
the detection mechanism (11) is configured to detect the step portion formed.

7. The battery cell insertion apparatus according to claim 1, wherein:
a temporary storage station (14) is provided between the housing sleeving mechanism and the overturning mechanism (9); and
the temporary storage station (14) is configured to temporarily store the battery cell on which the housing has been sleeved.

8. The battery cell insertion apparatus according to claim 1, wherein:
an NG station (15) is provided between the detection mechanism (11) and the welding mechanism (12);
a removal mechanism (16) is provided between the NG station (15) and the magnetic levitation conveying line; and
the removal mechanism (16) is configured to move a battery cell that is detected as an NG product by the detection mechanism (11) to the NG station (15).

9. The battery cell insertion apparatus according to claim 1, wherein:
the magnetic levitation conveying line comprises a return line body (1), and a plurality of conveying branch line bodies (2) intersecting the return line body (1); and
along each of the conveying branch line bodies (2), there are provided, respectively, the housing sleeving mechanism, the overturning mechanism (9), the pressing mechanism (10), the detection mechanism (11), the welding mechanism (12), and the transfer mechanism (13), which are arranged in sequence.

10. The battery cell insertion apparatus according to any one of claims 1 to 9, wherein:
the battery cell insertion apparatus comprises a rack (17); and
the magnetic levitation conveying line, the housing sleeving mechanism, the overturning mechanism (9), the pressing mechanism (10), the detection mechanism (11), the welding mechanism (12), and the transfer mechanism (13) are disposed on the rack (17).

11. A battery cell insertion method, comprising:
positioning and placing a battery cell on a following tray (3) by means of a clamping unit, and carrying a number of following trays (3) by a magnetic levitation conveying line to a housing sleeving mechanism, an overturning mechanism (9), a pressing mechanism (10), a detection mechanism (11), a welding mechanism (12), and a transfer mechanism (13) in sequence,
wherein, at the position of the housing sleeving mechanism, the housing is sleeved on the battery cell by the housing sleeving mechanism;
at the position of the overturning mechanism (9), the battery cell on which the housing has been sleeved is overturned by the overturning mechanism (9);
at the position of the pressing mechanism (10), the battery cell is pressed into the housing sleeved thereon by the pressing mechanism (10);
at the position of the detection mechanism (11), the pressed battery cell and housing are detected by the detection mechanism (11);
at the position of the welding mechanism (12), the battery cell and the housing are welded together by the welding mechanism (12); and
at the position of the transfer mechanism (13), the welded battery cell and housing are unloaded from the following tray (3) by the transfer mechanism (13).

12. The battery cell insertion method according to claim 11, wherein:
when the battery cell is placed in the following tray (3), the battery cell is erected in the following tray (3) by the clamping unit, and at the position of the housing sleeving mechanism, the housing is sleeved from the top of the battery cell onto the battery cell by the housing sleeving mechanism.

13. The battery cell insertion method according to claim 11, wherein:
in a process of the housing sleeving mechanism sleeving the housing on the battery cell, the housing is loaded one by one by a loading unit (4), and dust absorption is performed on the loaded housing by a dust absorption unit (5), and then the housing after dust absorption is sleeved onto the battery cell by an insertion unit (6).

14. The battery cell insertion method according to claim 11, wherein:
before the battery cell on which the housing has been sleeved is conveyed from the housing insertion mechanism to the overturning mechanism (9), a plurality of battery cells on which housings have been sleeved are temporarily stored at a temporary storage station (14), and then the battery cells on which housings have been sleeved are conveyed one by one.

15. The battery cell insertion method according to claim 11, wherein:
when the detection mechanism (11) detects the pressed battery cell and housing, if a detection result is a qualified product, the qualified product is conveyed to the welding mechanism (12) for welding; and if the detection result is an NG product, the NG product is moved to an NG station (15).
